# EUROPEAN PATENT APPLICATION

(11) **EP 4 485 945 A1**
(43) Date of publication of application: **01.01.2025**
(21) Application number: 24183483.7
(22) Date of filing: 20.06.2024
(51) Int. Cl.: H04N 21/43, H04N 21/472, H04N 21/6587

(54) **VIDEO SYNCHRONOUS PLAYBACK SYSTEM AND METHOD AND TERMINAL DEVICE FOR VIDEO SYNCHRONOUS PLAYBACK**

(30) Priority: 30.06.2023 US 202363524224 P; 11.08.2023 TW 112130306
(71) Applicant: Optoma Coporation, New Taipei City 231633 (TW)
(72) Inventor: Chu, Kuo-Hao, 231633 NEW TAIPEI CITY (TW)
(74) Representative: Ter Meer Steinmeister & Partner

(57) **Abstract**

A video synchronous playback system and a method and a terminal device for video synchronous playback are provided. The method includes: outputting a video by a first communication interface, wherein the video has a first playback configuration; in response to at least one of receiving a control command generated by a first playback configuration control area being operated and an expiration of a counter, outputting a first playback signal corresponding to the first playback configuration through the first communication interface by a first processor; and receiving the first playback signal by a second terminal device.

## Description

This application claims the priority of U.S. provisional applications serial no. 63/524,224, filed on June 30, 2023 and Taiwan application serial no. 112130306, filed on August 11, 2023.

### BACKGROUND

### Technical Field

The disclosure relates to a video playback technology, and particularly relates to a video synchronous playback system and a method and a terminal device for video synchronous playback.

### Description of Related Art

During a video conference or live streaming, a speechmaker may play a video through a terminal device for other participants to watch. However, when there are a large number of participants, as the speechmaker adjusts a playback progress of the video or due to a network delay, the progress of the video seen by each participant may be different, resulting in some participants being unable to keep up with the progress of the video conference or live streaming.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure is directed to a video synchronous playback system and a method and a terminal device for video synchronous playback, which are adapted to automatically synchronize video playback progresses of different terminal devices.

Additional aspects and advantages of the disclosure will be set forth in the description of the techniques disclosed in the disclosure.

The object is solved by the features of the independent claims. Preferred embodiments are given in the dependent claims.

To achieve one of or all aforementioned and other advantages, an embodiment of the disclosure provides a video synchronous playback system including a first terminal device and a second terminal device. The first terminal device includes a first screen, the first screen is configured to display a first display interface, the first display interface includes a first display window and a first playback configuration control area, wherein the first display window is configured to display a video, and the video has a first playback configuration. The second terminal device includes a second screen, the second screen is configured to display a second display interface, the second display interface includes a second display window, the second display window is configured to display the video, and the video has a second playback configuration. When the first playback configuration control area is operated, the first playback configuration of the video displayed in the first display window is changed, and the second playback configuration of the video displayed in the second display window is correspondingly adjusted to the first playback configuration.

In one or more embodiments, the first terminal device may further include a first processor and a first communication interface.

In one or more embodiments the first processor may be configured to execute: outputting the video by the first communication interface; in response to at least one of receiving a control command generated by the first playback configuration control area being operated and expiration of a timer, outputting a first playback signal corresponding to the first playback configuration through the first communication interface.

In one or more embodiments, the second terminal device may be configured to receive the first playback signal and output the video.

In one or more embodiments, the first processor of the first terminal device may be further configured to execute: resetting the timer in response to outputting the first playback signal.

In one or more an embodiments, the second terminal device may include a second processor and a second communication interface.

In one or more embodiments, the second processor may be configured to execute: receiving the video through the second communication interface; receiving the first playback signal from the first terminal device through the second communication interface, and updating the second playback configuration according to the first playback signal.

In one or more an embodiments, the second processor of the second terminal device may be further configured to execute: obtaining a time difference between a first playback progress of the first playback configuration and a second playback progress of the second playback configuration according to the first playback signal; and in response to the time difference being greater than a threshold, updating the second playback progress of the second playback configuration of the video according to the first playback signal.

In one or more an embodiments, the second processor may be further configured to execute: receiving an authorization command signal from the first terminal device through the second communication interface; in response to receiving the authorization command signal, outputting a second playback signal corresponding to the second playback configuration to the first terminal device through the second communication interface, wherein the first processor of the first terminal device updates the first playback configuration of the video according to the second playback signal.

In one or more an embodiments, the first processor of the first terminal device may be further configured to execute: outputting a stop authorization command signal to the second terminal device through the first communication interface.

In one or more embodiments, the second terminal device may receive the first playback signal from the first terminal device, and may update the second playback configuration of the video according to the first playback signal.

In one or more an embodiments, the control command may include at least one of: play, pause, stop, video quality, rewind, fast forward, seek to a specific time of the video, and a playback rate.

In one or more an embodiments, the first processor of the first terminal device may be further configured to execute: transmitting the first playback signal to the second terminal device through the first communication interface based on a communication protocol, wherein the communication protocol includes Web Socket.

In one or more an embodiments, the first processor of the first terminal device may be further configured to execute: in response to receiving a join signal from the second terminal device, transmitting the first playback signal to the second terminal device.

In one or more an embodiments, a playback source of the video comes from a cloud server.

To achieve one of or all aforementioned and other advantages, an embodiment of the disclosure provides a method for video synchronous playback adapted to a video synchronous playback system. The video synchronous playback system includes a first terminal device and a second terminal device, the first terminal device includes a first processor and a first communication interface, and the method for video synchronous playback includes following steps: outputting a video by the first communication interface, wherein the video has a first playback configuration; in response to at least one of receiving a control command for updating the first playback configuration and expiration of a timer, outputting a first playback signal corresponding to the first playback configuration through the first communication interface by the first processor; and receiving the first playback signal and outputting the video by the second terminal device.

In one or more an embodiments, the second terminal device may include a second processor and a second communication interface.

In one or more an embodiments, the step of receiving the first playback signal and receiving the video by the second terminal device may include: receiving the video through the second communication interface.

In one or more an embodiments, the video output by the second terminal device may have a second playback configuration; receiving the first playback signal from the first terminal device by the second communication interface; and updating the second playback configuration by the second processor according to the first playback signal.

In one or more an embodiments, the step of updating the second playback configuration by the second processor according to the first playback signal may include: obtaining a time difference between a first playback progress of the first playback configuration and a second playback progress of the second playback configuration by the second processor according to the first playback signal; and in response to the time difference being greater than a threshold, updating the second playback progress of the second playback configuration of the video by the second processor according to the first playback signal.

In one or more an embodiments, the method for video synchronous playback may further include: in response to receiving a join signal from the second terminal device, transmitting the first playback signal to the second terminal device by the first communication interface of the first terminal device.

In one or more an embodiments, the method for video synchronous playback further may include: receiving an authorization command signal from the first terminal device through the second communication interface; in response to receiving the authorization command signal, outputting a second playback signal corresponding to the second playback configuration to the first terminal device by the second communication interface; and updating the first playback configuration of the video by the first processor of the first terminal device according to the second playback signal.

In one or more an embodiments, the method for video synchronous playback may further include: outputting a stop authorization command signal to the second terminal device by the first communication interface; and receiving the first playback signal from the first terminal device by the second communication interface, and updating the second playback configuration of the video by the second processor according to the first playback signal.

In one or more an embodiments, the control command is associated with at least one of: play, pause, stop, video quality, rewind, fast forward, seek to a specific time of the video, and a playback rate.

To achieve one of or all aforementioned and other advantages, an embodiment of the disclosure provides a method for video synchronous playback, adapted to a terminal device, wherein the terminal device includes a processor and a communication interface, the method for video synchronous playback includes: outputting a video through a communication interface, wherein the video has a playback configuration; receiving an external playback signal from the external through the communication interface; obtaining a time difference between an external playback progress and a playback progress of the playback configuration through the processor according to the external playback signal; and in response to the time difference being greater than a threshold, updating the playback progress of the playback configuration by the processor according to the external playback signal.

In one or more an embodiments, the above method may further include following steps: receiving an authorization command signal from the external through the communication interface; and outputting a playback signal corresponding to the playback configuration to the external through the communication interface in response to receiving the authorization command signal.

To achieve one of or all aforementioned and other advantages, an embodiment of the disclosure provides a terminal device, and the terminal device is configured to implement the above-mentioned method for video synchronous playback.

To achieve one of or all aforementioned and other advantages, an embodiment of the disclosure provides a method for video synchronous playback, applied to a first terminal device, wherein the first terminal device includes a first processor and a first communication interface, and the method for video synchronous playback includes following steps: outputting a video through the first communication interface, wherein the video has a first playback configuration; in response to at least one of receiving a control command for updating the first playback configuration and expiration of a timer, outputting a first playback signal corresponding to the first playback configuration through the first communication interface by the first processor.

To achieve one of or all aforementioned and other advantages, an embodiment of the disclosure provides a terminal device, and the terminal device is configured to implement the above-mentioned method for video synchronous playback.

Based on the above description, the display interfaces of the screens of a master terminal device (i.e., the terminal device with control authority for playback configuration of the video) and a slave terminal device (i.e., the terminal device without control authority for playback configuration of the video) according to an embodiment of the disclosure respectively include a display window capable of displaying the video. When the playback configuration control area of the display interface of the screen of the master terminal device is operated, the playback configuration of the video displayed in the display window of the master terminal device is changed, and the playback configuration of the video displayed in the display window of the slave terminal device is correspondingly adjusted to the playback configuration of the master terminal device. The video synchronous playback system, the method and the terminal device for video synchronous playback of the disclosure may synchronize a video playback progress for multiple terminal devices without affecting the user's viewing experience of the video.

Other objectives, features and advantages of the disclosure will be further understood from the further technological features disclosed by the embodiments of the present disclosure wherein there are shown and described preferred embodiments of this disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram illustrating a video synchronous playback system according to an embodiment of the disclosure.
FIG. 2 is a schematic diagram illustrating another video synchronous playback system according to an embodiment of the disclosure.
FIG. 3 is a schematic diagram illustrating another video synchronous playback system according to an embodiment of the disclosure.
FIG. 4 is a flowchart illustrating a method for outputting a playback signal according to an embodiment of the disclosure.
FIG. 5 is a flowchart illustrating a method for synchronizing a playback progress of video according to an embodiment of the disclosure.
FIG. 6 is a flowchart illustrating a method for video synchronous playback according to an embodiment of the disclosure.
FIG. 7 is a flowchart illustrating another method for video synchronous playback according to an embodiment of the disclosure.
FIG. 8 is a flowchart illustrating another method for video synchronous playback according to an embodiment of the disclosure.

### DESCRIPTION OF The EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

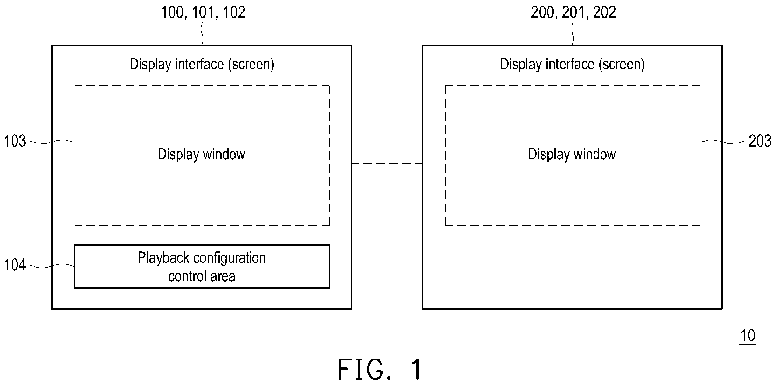

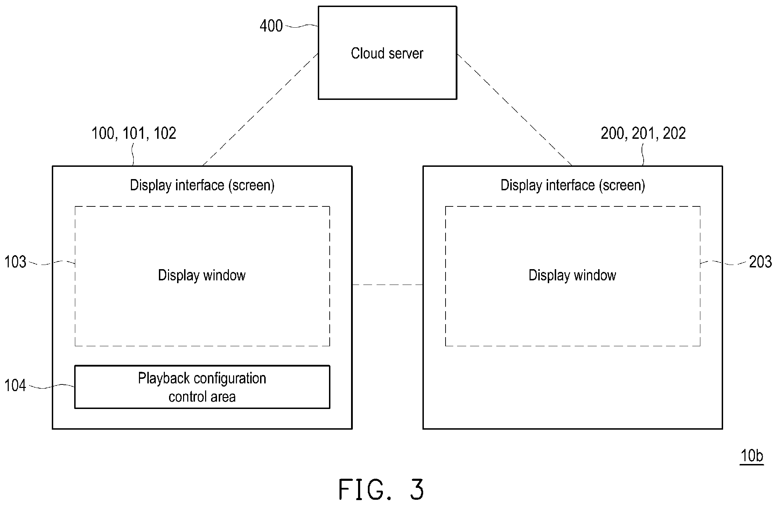

FIG. 1 is a schematic diagram illustrating a video synchronous playback system according to an embodiment of the disclosure. A video synchronous playback system 10 may include a plurality of terminal devices, such as a terminal device (first terminal device) 100 and a terminal device (second terminal device) 200. The terminal device 100 and the terminal device 200 are, for example, computers, smart phones, tablet computers, etc., which may respectively include a screen (first screen) 101, a screen (second screen) 201, and the screens 101, 201 may be, for example, display panel or touch screens, etc. The display panel may be a liquid crystal panel, LED panel or OLED panel. The terminal device 100 and the terminal device 200 may be connected to a same cloud server 400 (shown in FIG. 3), for example, via a network. The screens 101 and 201 are respectively used to display a display interface (first display interface) 102 and a display interface (second display interface) 202. The display interfaces 102 and 202 include a display window (first display window) 103 and a display window (second display window) 203 for displaying videos. In the embodiment, the display interface 102 of the terminal device 100 having the control authority of the playback configuration of video further includes a playback configuration control area (first playback configuration control area) 104. The playback configuration control area 104 is used to control a playback configuration 121 (first playback configuration, such as a playback progress and/or a playback speed, etc.) of the video. The playback progress means that a playback bar of the video. When the playback configuration control area 104 of the display interface 102 of the screen 101 of the terminal device 100 is operated by a user, the playback configuration 121 of the video displayed in the display window 103 of the terminal device 100 is changed, and a playback configuration 221 (second playback configuration) of the video displayed in the display window 203 of the terminal device 200 is correspondingly adjusted to the playback configuration 121 of the terminal device 100, so as to achieve the effect of playing the video synchronously.

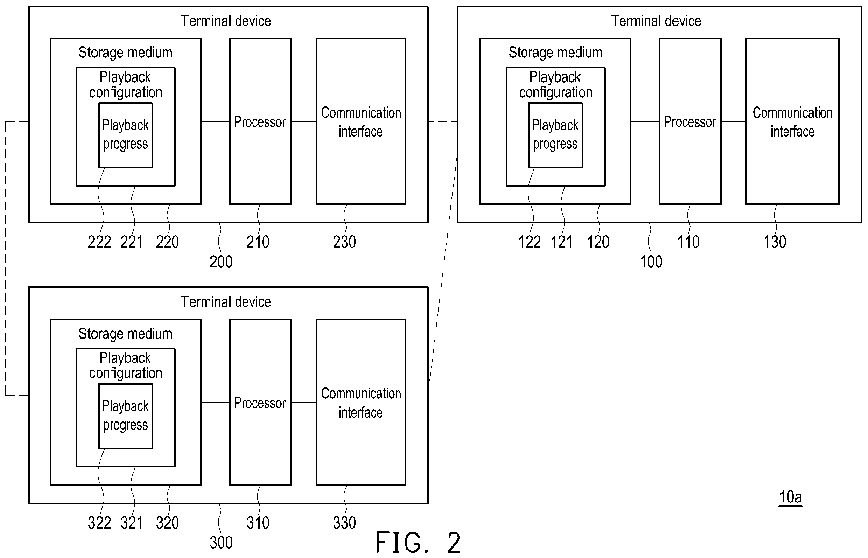

FIG. 2 is a schematic diagram illustrating another video synchronous playback system according to an embodiment of the disclosure. A video synchronous playback system 10a of the embodiment may include a plurality of terminal devices 100, 200 and 300 with similar structures and functions. Taking the terminal device 100 as an example, the terminal device 100 may include a processor (first processor) 110, a storage medium 120 and a communication interface (first communication interface) 130. FIG. 1 shows an external structure of the terminal device, and FIG. 2 shows an internal structure of the terminal device. The terminal device of the embodiment may include the structures shown in FIG. 1 and FIG. 2 at the same time.

The processor 110 is, for example, a central processing unit (CPU), or other programmable general purpose or special purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable logic gate array (FPGA) or other similar components or a combination of the above components. The processor 110 may be coupled to the screen 101 (shown in FIG. 1), the storage medium 120 and the communication interface 130, and access and execute a plurality of modules and various applications stored in the storage medium 120.

The storage medium 120 is, for example, any type of fixed or removable random access memory (RAM), read-only memory (ROM), flash memory, hard disk drive (HDD), solid state drive (SSD) or similar components or a combination of the above components, and is used to store a plurality of modules, programs or various applications that may be executed by the processor 110. The storage medium 120 is a non-transitory processor-readable medium. The storage medium 120 may store the playback configuration 121 for outputting video, and the playback configuration 121 may include a playback progress (first playback progress) 122 corresponding to the video output by the communication interface 130. The playback configuration 121/221/321 may be at least one program. In an embodiment, the playback configuration 121 may further include parameters such as image quality, playback rate, brightness, contrast, sharpness, saturation, color temperature, or volume, etc. The playback configuration control area 104 shown in FIG. 1 may be a control list for adjusting the playback configuration 121.

The communication interface 130 transmits or receives signals in a wireless or wired manner. The communication interface 130 may transmit signals with the terminal devices 200 and 300 through a communication protocol such as Web Socket. The communication interface 130 may also include a transceiver to perform operations such as low noise amplification, impedance matching, frequency mixing, up or down frequency conversion, filtering, amplification, etc. In an embodiment, the communication interface 130 may be communicatively connected to other display devices (such as a projector or a display, etc.), and output a video to the display devices to play the video through the display devices.

The terminal device 200 may include a processor (second processor) 210, a storage medium 220, and a communication interface (second communication interface) 230, and the terminal device 300 may include a processor 310, a storage medium 320, and a communication interface 330. The processor 210/310, the storage medium 220/320, and the communication interface 230/330 may respectively have structures and functions similar to that of the processor 110, the storage medium 120, and the communication interface 130, so that details thereof are not repeated here. The storage medium 220/320 may store a playback configuration 221/321 for outputting a video, and the playback configuration 221/321 may include a playback progress 222/322 corresponding to the video output by the communication interface 230/330.

In the following embodiments, it is assumed that the terminal device 100 is a master terminal device having the authority to adjust the playback configuration of the video. Other terminal devices (for example: the terminal device 200 or the terminal device 300) may be slave terminal devices without the authority to adjust the playback configuration of the video.

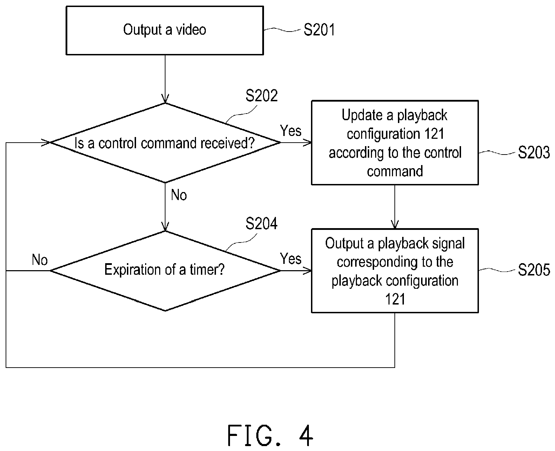

FIG. 3 is a schematic diagram illustrating another video synchronous playback system according to an embodiment of the disclosure. A difference between FIG. 3 and FIG. 1 is that a video synchronous playback system 10b further includes a cloud server 400. FIG. 4 is a flowchart illustrating a method for outputting a playback signal according to an embodiment of the disclosure, and the method may be implemented by the master terminal device (i.e., the terminal device 100). In step S201, the communication interface 130 of the terminal device 100 may output a video, and the playback configuration 121 of the video may include the playback progress 122 of the video. A playback source of the video is, for example, from the storage medium 120 of the terminal device 100 or the cloud server 400. For example, the processor 110 may be communicatively connected to the cloud server 400 through the communication interface 130 to download the video from the cloud server 400. Then, the processor 110 may output the video to the screen 101, other display devices or other terminal devices (for example, the terminal devices 200 and/or 300) through the communication interface 130.

In step S202, the processor 110 may determine whether a control command is received. For example, the processor 110 may receive the control command generated by operating the playback configuration control area 104 on the display interface 102 through an input device (such as a keyboard, a mouse, or a touch screen) via the communication interface 130. The control command may be used to update the parameter (for example: the playback progress 122) in the playback configuration 121. For example, the control command may be associated with play, pause, stop, video quality, rewind, fast forward, seek to a specific time of the video or a playback rate. If the processor 110 receives the control command, proceed to step S203. If the processor 110 has not received the control command, proceed to step S204.

In step S203, the processor 110 may update the playback configuration 121 according to the control command. For example, if the processor 110 receives a control command for fast forwarding the video, the processor 110 may perform fast forwarding on the video output by the communication interface 130 to update the playback rate and/or playback progress 122 in the playback configuration 121.

In step S204, the processor 110 may determine whether a timer expires. Specifically, the timer may be stored in the storage medium 120, and the timer may be reset when a specific event occurs. The timer may be used to configure a synchronization cycle of the video synchronous playback system 10. If the processor 110 determines that the timer expires (for example: 5 seconds), proceed to step S205. If the processor 110 determines that the timer has not expired, proceed to step S202 again.

In step S205, the processor 110 may output a playback signal corresponding to the playback configuration 121 (for example: the playback progress 122) through the communication interface 130. For example, the processor 110 may transmit the playback signal to the terminal device 200 or the terminal device 300 via a communication protocol of Web Socket, so as to indicate the playback configuration 121 (for example, the playback progress 122) to the terminal device 200 or the terminal device 300. On the other hand, in response to outputting the playback signal, the processor 110 may reset the timer.

In an embodiment, step S204 in the process of FIG. 4 may be executed earlier than step S202 and step S203. For example, the processor 110 may first determine whether the timer has expired, and then determine whether the control command is received after determining that the timer has not expired.

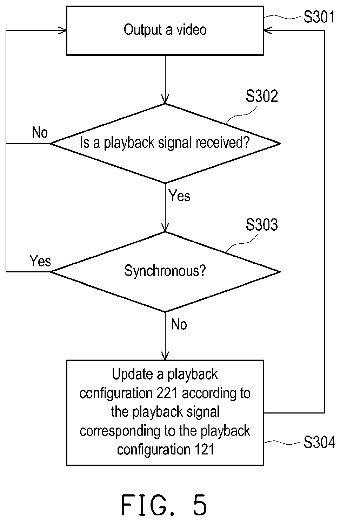

FIG. 5 is a flowchart illustrating a method for synchronizing a playback progress of video according to an embodiment of the disclosure, and the method may be implemented by a slave terminal device (i.e., the terminal device 200 or the terminal device 300). Taking the terminal device 200 as an example, the communication interface 230 of the terminal device 200 may receive a video provided by a source. In step S301, the communication interface 230 of the terminal device 200 may output a video, and the playback configuration 221 of the video may include a playback progress (the second playback progress) 222 of the video. The source of the video is, for example, the terminal device 100 or the cloud server 400.

In step S302, the processor 210 may determine whether the communication interface 230 receives a playback signal from the master terminal device (i.e., the terminal device 100), and the playback signal corresponds to the playback configuration 121. If the processor 210 determines that the communication interface 230 has received the playback signal, proceed to step S303. If the processor 110 determines that the communication interface 230 has not received the playback signal, then re-execute step S301.

In step S303, the processor 210 may obtain the playback progress 122 of the playback configuration 121 according to the playback signal, and then obtain a time difference between the playback progress 122 and the playback progress 222 of the playback configuration 221. Then, the processor 210 may determine whether the playback progress 122 is synchronized with the playback progress 222 according to the time difference. Specifically, if the time difference between the playback progress 122 and the playback progress 222 is less than or equal to a threshold (the threshold is, for example, plus or minus 3 seconds), the processor 210 may determine that the playback progress 122 is synchronized with the playback progress 222, and re-execute step S301. If the time difference between the playback progress 122 and the playback progress 222 is greater than the threshold, the processor 210 may determine that the playback progress 122 is not synchronized with the playback progress 222, and proceed to step S304.

In step S304, the processor 210 may update the playback configuration 221 according to the playback signal corresponding to the playback configuration 121, so that the playback progress 222 of the playback configuration 221 is synchronized with the playback progress 122 of the playback configuration 121. The processor 210 may output a video according to the updated playback configuration 221.

In an embodiment, taking FIG. 2 as an example, when the plurality of terminal devices (for example: the terminal devices 100 or 200) in the video synchronous playback system 10a have synchronously played videos for a period of time, if a new terminal device (for example, the terminal device 300) wants to join in the synchronous video playback, the terminal device 100 serving as the master terminal device may immediately perform video synchronization for the new terminal device. The processor 310 of the terminal device 300 may transmit a join signal to the terminal device 100 through the communication interface 330. In response to receiving the join signal from the terminal device 300, the communication interface 130 of the terminal device 100 may transmit the playback signal corresponding to the playback progress 122 to the terminal device 300 based on a communication protocol such as Web Socket. The processor 310 of the terminal device 300 may update the playback progress 322 of the video according to the playback signal.

In an embodiment, the master terminal device (for example: the terminal device 100) may give other slave terminal devices (for example: the terminal device 200 or the terminal device 300) the authority to adjust the playback configuration of the video. Specifically, the processor 110 of the terminal device 100 may transmit an authorization command signal to the terminal device 200 through the communication interface 130. The processor 210 of the terminal device 200 may receive the authorization command signal through the communication interface 230. The processor 210 may adjust the playback configuration of the video according to the authorization command signal, i.e., the display interface 202 of the terminal device 200 has the playback configuration control area 104 as shown in FIG. 3. The processor 210 may execute the process shown in FIG. 4 to output the playback signal corresponding to the playback configuration 221 to other terminal devices (for example: the terminal device 100 and/or the terminal device 300) to synchronize the playback progress of each terminal device. In this way, during a video conference or live streaming, when a participant needs to adjust the playback progress of the video, the participant has the authority to adjust the playback of the video, and does not need to request the speechmaker to adjust the playback progress by notifying the speechmaker corresponding to the master terminal device, the embodiment may achieve the effect of multiple people operating the playback progress of the video.

If the user of the terminal device 100 decides to stop giving the terminal device 200 the authority to adjust the playback configuration of the video, the user may perform an operation of stopping the authority of the terminal device 200 in the playback configuration control area 104 of the display interface 101, and the processor 110 of the terminal device 100 may output a stop authorization command signal to the terminal device 200 through the communication interface 130. The processor 210 of the terminal device 200 may receive the stop authorization command signal from the terminal device 100 through the communication interface 230. The processor 210 may stop the output of the playback signal corresponding to the playback configuration 221 according to the stop authorization command signal, and the processor 210 may execute the process shown in FIG. 5, so as to determine whether to update the playback progress 222 according to the playback signal received from the terminal device 100.

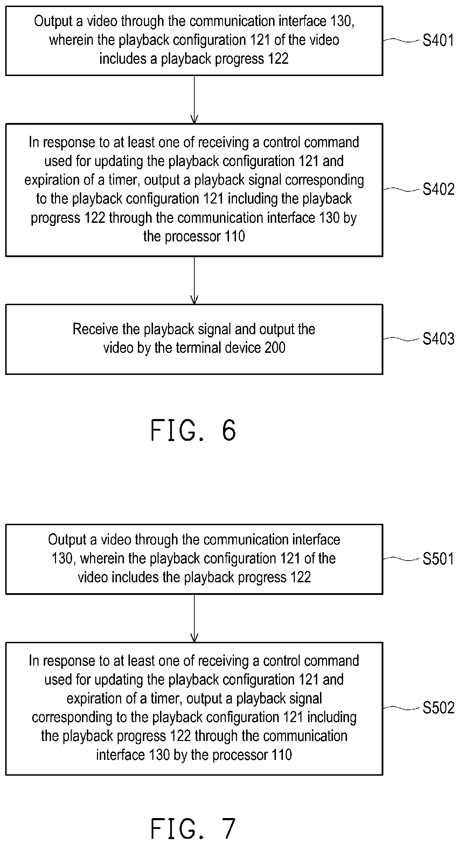

FIG. 6 is a flowchart illustrating a method for video synchronous playback according to an embodiment of the disclosure. The method may be implemented by the video synchronous playback system 10a shown in FIG. 2. In step S401, the communication interface 130 outputs a video, wherein the playback configuration 121 of the video includes the playback progress 122. In step S402, in response to at least one of receiving a control command used for updating the playback configuration 121 and expiration of a timer, the processor 110 outputs a playback signal corresponding to the playback configuration 121 including the playback progress 122 through the communication interface 130. In step S403, the terminal device 200 receives the playback signal and output the video.

FIG. 7 is a flowchart illustrating another method for video synchronous playback according to an embodiment of the disclosure. The method may be implemented by the terminal device 100 shown in FIG. 2. In step S501, the communication interface 130 outputs a video, wherein the playback configuration 121 of the video includes the playback progress 122. In step S502, in response to at least one of receiving a control command used for updating the playback configuration 121 and expiration of a timer, the processor 110 outputs a playback signal corresponding to the playback configuration 121 including the playback progress 122 through the communication interface 130.

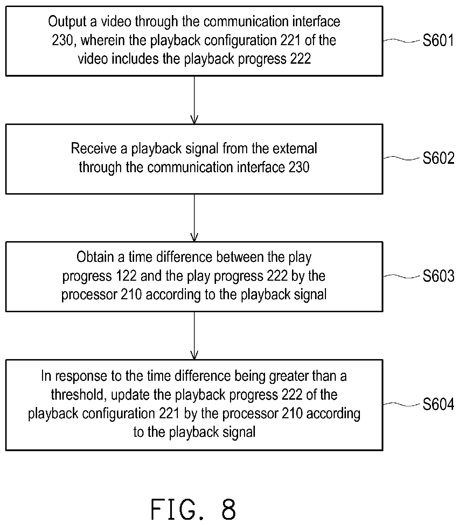

FIG. 8 is a flowchart illustrating another method for video synchronous playback according to an embodiment of the disclosure. The method may be implemented by the terminal device 200 (and/or the terminal device 300) shown in FIG. 2. In step S601, the communication interface 230 outputs a video, wherein the playback configuration 221 of the video includes the playback progress 222. In step S602, a playback signal (an external playback signal) from the external (for example: the terminal device 100) is received through the communication interface 230. In step S603, a time difference between the play progress 122 and the play progress 222 is obtained by the processor 210 according to the playback signal. In step S604, in response to the time difference being greater than a threshold, the playback progress 222 of the playback configuration 221 is updated by the processor 210 according to the playback signal.

In summary, the master terminal device of the disclosure may output the playback signal for synchronizing the playback configuration of the video according to the control command or the timer. The slave terminal device receiving the playback signal may determine whether the playback progress of its own playback configuration is synchronized with the playback progress of the master terminal device according to the playback signal. The slave terminal device may perform video synchronization when the time difference between the two playback progresses is too large. If the time difference between the two playback progresses is not enough to cause interference to the user of the slave terminal device, the slave terminal device may not perform video synchronization to avoid affecting the user's viewing experience of the video. In addition, the master terminal device according to an embodiment of the disclosure may also transfer the authority to adjust the playback configuration of the video to users of other terminal devices.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims. Moreover, no element and component in the present disclosure is intended to be dedicated to the public regardless of whether the element or component is explicitly recited in the following claims.

## Claims

1. A video synchronous playback system, comprising:
a first terminal device (100), comprising a first screen (101), wherein the first screen (101) is configured to display a first display interface (102), the first display interface (102) comprises a first display window (103) and a first playback configuration control area (104), wherein the first display window (103) is configured to display a video, and the video has a first playback configuration; and
a second terminal device (200), comprising a second screen (201), wherein the second screen (201) is configured to display a second display interface (202), the second display interface (202) comprises a second display window (203), the second display window (203) is configured to display the video, and the video has a second playback configuration,
wherein when the first playback configuration control area (104) is operated, the first playback configuration of the video displayed in the first display window (103) is changed, and the second playback configuration of the video displayed in the second display window (203) is correspondingly adjusted to the first playback configuration.

2. The video synchronous playback system as claimed in claim 1, wherein the first terminal device (100) further comprises a first processor (110) and a first communication interface (130), and the first processor (110) is configured to execute:
outputting the video by the first communication interface (130); and
in response to at least one of a control command generated by the first playback configuration control area (104) being operated and expiration of a timer, outputting a first playback signal corresponding to the first playback configuration through the first communication interface (130),
wherein the second terminal device (200) is configured to receive the first playback signal, preferably the control command comprises at least one of: play, pause, stop, video quality, rewind, fast forward, seek to a specific time of the video, and a playback rate.

3. The video synchronous playback system as claimed in claim 2, wherein the first processor (110) of the first terminal device (100) is further configured to execute: resetting the timer in response to outputting the first playback signal.

4. The video synchronous playback system as claimed in any one of the preceding claims, wherein the second terminal device (200) comprises a second processor (210) and a second communication interface (230), and the second processor (210) is configured to execute:
receiving the video through the second communication interface (230); and
receiving the first playback signal from the first terminal device (100) through the second communication interface (230), and updating the second playback configuration according to the first playback signal,
the second processor (210) of the second terminal device (200) is further configured to execute:
obtaining a time difference between a first playback progress of the first playback configuration and a second playback progress of the second playback configuration according to the first playback signal; and
in response to the time difference being greater than a threshold, updating the second playback progress of the second playback configuration of the video according to the first playback signal.

5. The video synchronous playback system as claimed in claim 4, wherein the second processor (200) is further configured to execute:
receiving an authorization command signal from the first terminal device (100) through the second communication interface (230); and
in response to receiving the authorization command signal, outputting a second playback signal corresponding to the second playback configuration to the first terminal device (100) through the second communication interface (230), wherein the first processor (110) of the first terminal device (100) updates the first playback configuration of the video according to the second playback signal,
the first processor (110) of the first terminal device (100) is further configured to execute:
outputting a stop authorization command signal to the second terminal device (200) through the first communication interface (130), wherein the second terminal device (200) receives the first playback signal from the first terminal device (100), and updates the second playback configuration of the video according to the first playback signal.

6. The video synchronous playback system as claimed in any one of the preceding claims 2-5, wherein the first processor (110) of the first terminal device (100) is further configured to execute transmitting the first playback signal to the second terminal device (200) through the first communication interface (130) based on a communication protocol, wherein the communication protocol comprises Web Socket.

7. The video synchronous playback system as claimed in any one of the preceding claims 2-6, wherein the first processor (110) of the first terminal device (100) is further configured to execute in response to receiving a join signal from the second terminal device (200), transmitting the first playback signal to the second terminal device (200).

8. The video synchronous playback system as claimed in any one of the preceding claims, wherein a playback source of the video comes from a cloud server (400).

9. A method for video synchronous playback, adapted to a video synchronous playback system (10), wherein the video synchronous playback system (10) comprises a first terminal device (100) and a second terminal device (200), the first terminal device (100) comprises a first processor (110) and a first communication interface (130), the method for video synchronous playback comprising:
outputting a video by the first communication interface (130), wherein the video has a first playback configuration;
in response to at least one of receiving a control command for updating the first playback configuration and expiration of a timer, outputting a first playback signal corresponding to the first playback configuration through the first communication interface (130) by the first processor (110); and
receiving the first playback signal by the second terminal device (200).

10. The method as claimed in claim 9, wherein the second terminal device (200) comprises a second processor (210) and a second communication interface (230), and the step of receiving the first playback signal and outputting the video by the second terminal device (200) comprises:
receiving the video through the second communication interface (230), wherein the video has a second playback configuration;
receiving the first playback signal from the first terminal device (100) by the second communication interface (230); and
updating the second playback configuration by the second processor (230) according to the first playback signal,
the step of updating the second playback configuration by the second processor (230) according to the first playback signal comprises:
obtaining a time difference between a first playback progress of the first playback configuration and a second playback progress of the second playback configuration by the second processor (230) according to the first playback signal; and
in response to the time difference being greater than a threshold, updating the second playback progress of the second playback configuration of the video by the second processor (230) according to the first playback signal.

11. The method as claimed in claim 10, further comprising in response to receiving a join signal from the second terminal device (200), transmitting the first playback signal to the second terminal device (200) by the first communication interface (130) of the first terminal device (100).

12. The method as claimed in claim 10 or 11, further comprising:
receiving an authorization command signal from the first terminal device (100) through the second communication interface (230);
in response to receiving the authorization command signal, outputting a second playback signal corresponding to the second playback configuration to the first terminal device (100) by the second communication interface (230); and
updating the first playback configuration of the video by the first processor (110) of the first terminal device (100) according to the second playback signal,
further comprising:
outputting a stop authorization command signal to the second terminal device (200) by the first communication interface (130); and
receiving the first playback signal from the first terminal device (100) by the second communication interface (230), and updating the second playback configuration of the video by the second processor (210) according to the first playback signal.

13. A method for video synchronous playback, adapted to a terminal device (200), wherein the terminal device (200) comprises a processor (210) and a communication interface (230), the method for video synchronous playback comprising:
receiving a video through a communication interface (230), wherein the video has a playback configuration;
receiving an external playback signal from the external through the communication interface (230);
obtaining a time difference between an external playback progress and a playback progress of the playback configuration through the processor (210) according to the external playback signal; and
in response to the time difference being greater than a threshold, updating the playback progress of the playback configuration by the processor (210) according to the external playback signal,
further comprising:
receiving an authorization command signal from the external through the communication interface (230); and
outputting a playback signal corresponding to the playback configuration to the external through the communication interface (230) in response to receiving the authorization command signal.

14. A method for video synchronous playback, applied to a first terminal device (100), wherein the first terminal device (100) comprises a first processor (110) and a first communication interface (130), the method for video synchronous playback comprising:
outputting a video through the first communication interface (130), wherein the video has a first playback configuration; and
in response to at least one of receiving a control command for updating the first playback configuration and expiration of a timer, outputting a first playback signal corresponding to the first playback configuration through the first communication interface (130) by the first processor (110).

15. A terminal device (100, 200) configured to implement the method for video synchronous playback as claimed in claim 13 or 14.
